# EUROPEAN PATENT APPLICATION

(11) **EP 1 065 839 A2**
(43) Date of publication of application: **03.01.2001**
(21) Application number: 00112900.6
(22) Date of filing: 19.06.2000
(51) Int. Cl.: H04L 12/56, H04B 7/24, H04Q 7/28

(54) **System and apparatus for two-way radio communication between a plurality of communication terminal units, and broadcast transmission method for transmitting data packets to other communication terminal units**

(30) Priority: 30.06.1999 JP 18585199
(71) Applicant: KABUSHIKI KAISHA TOSHIBA, Kawasaki-shi, Kanagawa-ken 210-8572 (JP)
(72) Inventor: Tanaka, Akio, 1-1 Shibaura 1-chome Minato-ku Tokyo 105 (JP); Aoyagi, Kazunori, 1-1 Shibaura 1-chome Minato-ku Tokyo 105 (JP)
(74) Representative: Blumbach, Kramer & Partner GbR

(57) **Abstract**

In starting broadcast transmission, a radio communication apparatus as a transmission source transmits an auxiliary message packet (A11). When a response message packet is transmitted from a radio communication apparatus as a target destination, the radio communication apparatus as the transmission source determines that a communication route to the radio communication apparatus as the target destination has been established (A14, A15), and transmits a broadcast transmission data packet containing data to be broadcast (A18). Each radio communication apparatus broadcasts the broadcast transmission data packet transmitted from the radio communication apparatus as the transmission source on the basis of the type information of broadcast transmission data which is acquired at the time of the reception of the response message packet.

## Description

The present invention relates to a radio communication system designed for broadcast transmission, in particular, in a radio network constituted by a plurality of radio terminals, and a radio communication apparatus and broadcast transmission method used in the radio communication system.

In a communication network constituted by a plurality of communication terminal units, transmission of identical data to target terminal units at once through the respective terminal units is referred to as broadcast transmission or broadcast communication.

According to a characteristic feature of this communication scheme, each terminal unit participating in broadcast communication detects the existence of other terminal units existing around each terminal unit, stores the detected information as terminal information, and performs broadcast communication on the basis of the terminal information.

First of all, a given terminal unit periodically (e.g., at two-second intervals) sends an existence notification packet to notify other terminal units of its existence. In an existence notification packet, the address of the given terminal unit that transmits the packet and the addresses of all other terminal units whose existence is detected and stored in the given terminal unit are written.

Every terminal unit in the network repeatedly transmits such an existence notification packet. This allows each terminal to know other terminal units with which it can directly communicate and terminal units that can relay communication with terminal units with which it cannot directly communicate.

The terminal information obtained from this existence notification packet is stored in each terminal, so that broadcast transmission data is sent in a predetermined order on the basis of the terminal information.

As described above, in the prior art, the information of neighboring terminal units is stored in each terminal unit in advance, and data transmitted from a transmitting terminal unit are sequentially sent to the next terminal units, thereby executing broadcast communication.

In this scheme, however, each terminal unit must periodically transmit/receive an existence notification packet to notify other terminals of its existence and comprehend the existence of other terminal units. For this reason, a battery-driven terminal unit greatly consumes power, resulting in a decrease in the maximum communicative time of the terminal unit.

Furthermore, according to the conventional scheme, since broadcast transmission is performed in accordance with the prestored information of each terminal unit, broadcast transmission cannot be performed with respect to a terminal unit that is not registered as terminal information in each terminal unit. This limits the number of terminals for which broadcast transmission can be performed.

The present invention has been made in consideration of the above points, and has as its object to provide a radio communication system, radio communication apparatus, and broadcast transmission method, which can perform broadcast transmission only when a communication route to a target radio communication apparatus is established, without periodically exchanging pieces of information of neighboring terminals, and impose no limitation on the number of terminals to which data is broadcast.

In order to achieve the above object, according to the first aspect of the present invention, there is provided a radio communication apparatus comprising:
first transmission means for transmitting a first transmission packet that designates at least one of radio communication apparatuses as target destinations in starting broadcast transmission;
means for receiving response packets sent from radio communication apparatuses which directly communicate with each other after the first transmission packet is transmitted from the first transmission means;
means for determining on the basis of the received response packets means whether a communication route to the radio communication apparatus as the target destination is established; and
second transmission means for transmitting a broadcast transmission data packet containing data to be broadcast when the determined determination result indicates that the communication route to at least one of the radio communication apparatuses as the target destinations is established.

According to the second aspect of the present invention, there is provided a radio communication system comprising:
a radio communication apparatus serving as a transmission source for performing broadcast transmission;
at least one of radio communication apparatuses serving as target destinations; and
a plurality of radio communication apparatuses for performing relaying operation between the radio communication apparatus as the transmission source and at least one of the radio communication apparatuses as the target destinations,
   wherein the radio communication apparatus as the transmission source transmits a transmission packet containing identification information for identifying a radio communication apparatus as a target destination in starting broadcast transmission,
   the at least one of the radio communication apparatuses as the target destinations transmits a response packet corresponding to the transmission packet upon receiving the transmission packet through the plurality of radio communication apparatuses,
   the radio communication apparatus as the transmission source transmits a broadcast transmission data packet containing data to be broadcast upon receiving a response packet from at least one of the all radio communication apparatuses as the target destinations, and
   at least one of the radio communication apparatuses as the target destinations receives the broadcast transmission data packet through the plurality of radio communication apparatuses.

According to the third aspect of the present invention, there is provided a radio communication system comprising:
a radio communication apparatus as a transmission source for performing broadcast transmission;
at least one of radio communication apparatuses as target destinations; and
a plurality of radio communication apparatuses for performing relaying operation between the radio communication apparatus as the transmission source and at least one of the radio communication apparatuses as the target destinations,
   wherein in starting broadcast transmission, the radio communication apparatus as the transmission source transmits a first transmission packet to which transmission source identification information indicating the self-apparatus, target destination identification information indicating a target destination, and broadcast identification information unique to data to be broadcast are added,
   a radio communication apparatus, of the plurality of radio communication apparatuses, which has received a first transmission packet containing target destination identification information different from self-identification information, retransmits a second transmission packet in which the transmission source identification information contained in the received first transmission packet is replaced with the self-identification information, and stores the transmission source identification information contained in the received first transmission packet,
   a radio communication apparatus as a target destination which has received the first or second transmission packet containing target destination identification information coinciding with the self-identification information transmits a first response packet in which transmission source identification information contained in the first or second packet is set as response destination identification information,
   a radio communication apparatus, other than the transmission source, which has received the first response packet containing response destination identification information coinciding with the self-identification information retransmits a second response packet in which the response destination identification information contained in the received first response packet is replaced with the transmission source identification information stored at the time of reception of the first transmission packet, and stores broadcast identification information contained in the received first response packet,
   the radio communication apparatus as the transmission source which has received the first or second response packet containing response destination identification information coinciding with the self-identification information determines that a communication route to the radio communication apparatus as the target destination has been established, when the target destination identification information contained in the received first or second response packet indicates a designated target destination, and transmits a broadcast transmission data packet containing data to be broadcast and broadcast identification information unique to the data, and
   each radio communication apparatus repeatedly retransmits the broadcast transmission data packet when the broadcast identification information contained in the broadcast transmission data packet coincides with the broadcast identification information stored at the time of reception of the first response packet, thereby performing broadcast transmission with respect to the radio communication apparatus as the target destination.

According to the present invention, when broadcast transmission is to be started, first data to which the identification information of a radio communication apparatus as a final transmission target is added is transmitted first. When response data is returned from the target radio communication apparatus, it is determined that a communication route has been established, and second data containing transmission data is broadcast.

Upon receiving the second data, each radio communication apparatus retransmits the second data if identification information unique to the transmission data contained in the second data coincides with the identification information of the transmission data stored at the time of the reception of the response data. This operation is repeated.

In this manner, when a response to the first data is returned after the transmission of the first data, it is determined that a communication route to a radio communication apparatus as a target destination has been established, and the second data containing actual data is transmitted. This makes it possible to perform broadcast transmission only when a communication route is established, without periodically exchanging pieces of information of neighboring terminal in advance. In addition, the number of terminals to which data is broadcast is not limited.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram showing an example of the arrangement of a radio network according to an embodiment of the present invention;
FIG. 2 is a sequence diagram showing procedures for performing broadcast transmission when one radio communication apparatus is designated as a target destination;
FIG. 3 is a sequence diagram showing procedures for performing broadcast transmission when two radio communication apparatuses are designated as target destinations;
FIG. 4 is a sequence diagram showing procedures for performing broadcast transmission with respect to all radio communication apparatuses in the radio network;
FIG. 5 is a view showing the format of an auxiliary message packet;
FIG. 6 is a view showing the format of a response message packet;
FIG. 7 is a view showing the format of a broadcast transmission data packet;
FIG. 8 is a block diagram showing the arrangement of a radio communication apparatus;
FIG. 9 is a flow chart showing the processing performed by a radio communication apparatus as a transmission source which starts broadcast transmission; and
FIGS. 10A and 10B are flow charts showing the processing performed by a radio communication apparatus which receives and retransmits broadcast transmission data.

An embodiment of the present invention will be described below with reference to the views of the accompanying drawing.

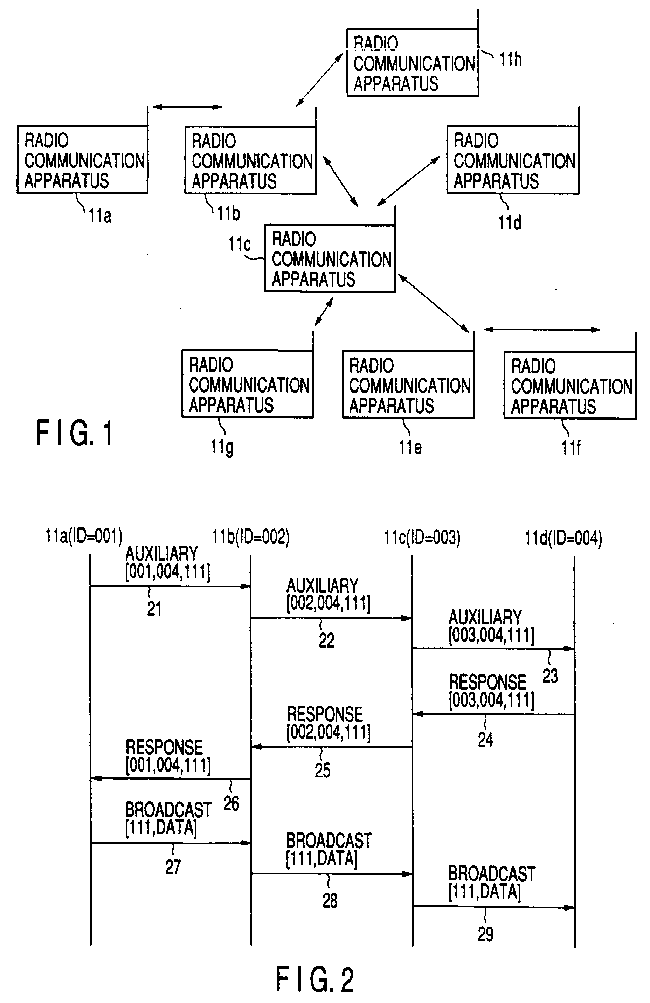

FIG. 1 is a block diagram showing an example of the arrangement of radio network constituted by a plurality of radio communication apparatuses according to an embodiment of the present invention.

Assume that eight radio communication apparatuses 11a to 11h exist. Assume that each of these radio communication apparatuses 11a to 11h has a limited communication area, and can directly communicate with only neighboring radio communication apparatuses. As a radio communication apparatus, for example, a portable personal computer having a radio communication function is available.

The radio communication apparatus 11a and radio communication apparatuses 11b to 11h can communicate with each other by radio in predetermined areas. Each of these radio communication apparatuses has a broadcast transmission function of transmitting identical data to other radio communication apparatuses at once.

Owing to the characteristics of radio communications, when viewed from a given radio communication apparatus, there are radio communication apparatuses with which communication can be performed and radio communication apparatuses with which communication cannot be performed depending on the limitation based on the maximum distances that radio waves can reach, the influences of obstacles, and the like.

Referring to FIG. 1, the arrows indicate that direct radio communication can perform between the corresponding radio communication apparatuses, whereas direct radio communication cannot be performed between the radio communication apparatuses having no arrows written therebetween.

For example, the radio communication apparatus 11a can perform direct radio communication with only the radio communication apparatus 11b. The radio communication apparatus 11b can mutually perform direct radio communication with the radio communication apparatuses 11a, 11c, and 11h but cannot perform direct radio communication with the radio communication apparatus 11d.

Radio communication apparatuses can arbitrarily join and leave the radio network. Therefore, the number of terminals constituting the radio network changes over time. In addition, since each radio communication apparatus can arbitrarily move, the number of radio communication apparatuses with which a given radio communication apparatus can perform direct radio communication changes over time.

Broadcast transmission will be described below.

Assume that the radio communication apparatus 11a is to perform broadcast transmission to the remaining radio communication apparatuses 11b to 11h existing in the radio network.

In the case shown in FIG. 1, the radio communication apparatus 11a can perform direct radio communication with only the radio communication apparatus 11b. For this reason, data broadcast from the radio communication apparatus 11a can be received by only the radio communication apparatus 11b, but cannot be received by the radio communication apparatuses 11c to 11h.

Upon receiving the broadcast transmission data sent from the radio communication apparatus 11a, the radio communication apparatus 11b retransmits the broadcast transmission data. The retransmitted broadcast transmission data is then received by the radio communication apparatuses 11c and 11h which can perform direct radio communication with the radio communication apparatus 11b.

The radio communication apparatuses 11c and 11h retransmit the received broadcast transmission data. By repeating such operation, broadcast transmission can be performed with respect to target radio communication apparatuses or all radio communication apparatuses in the radio network.

According to the scheme of the present invention, when a given radio communication apparatus starts such broadcast transmission, it transmits an auxiliary message packet consisting of a transmission source ID (identification information) indicating the apparatus itself, a target ID indicating a target radio communication apparatus, and a broadcast transmission data ID indicating data to be broadcast.

When a response message packet is returned from the target radio communication apparatus, a broadcast transmission data packet containing actual data is transmitted. Upon receiving this broadcast transmission data packet, each radio communication apparatus retransmits the broadcast transmission data packet if the broadcast transmission data ID contained in the received packet coincides with the broadcast transmission data ID stored at the time of the reception of the above response message packet. By repeating this operation, the data is broadcast to the target radio communication apparatus.

More specifically, broadcast transmission is performed according to procedures like those shown in FIG. 2.

FIG. 2 is a sequence diagram showing procedures for performing broadcast transmission when one target radio communication apparatus is designated. According to the procedures shown in FIG. 2, the radio communication apparatus 11a is the transmission source of broadcast transmission data, and the broadcast transmission data is sequentially transmitted from the radio communication apparatus 11a to the radio communication apparatus 11b, from the radio communication apparatus 11b to the radio communication apparatus 11c, and from the radio communication apparatus 11c to the radio communication apparatus 11d. In this case, one radio communication apparatus 11d is set as a final transmission target.

Assume that the ID (Identification Information) assigned to the radio communication apparatus 11a is "001"; the ID assigned to the radio communication apparatus 11b, "002"; the ID assigned to the radio communication apparatus 11c, "003", and the ID assigned to the radio communication apparatus 11d, "004".

Assume also that the ID assigned to the data to be broadcast is "111". This broadcast transmission data ID is an ID uniquely assigned to each data to be broadcast, and no other data has the same ID.

### (Transmission of Auxiliary Message Packet)

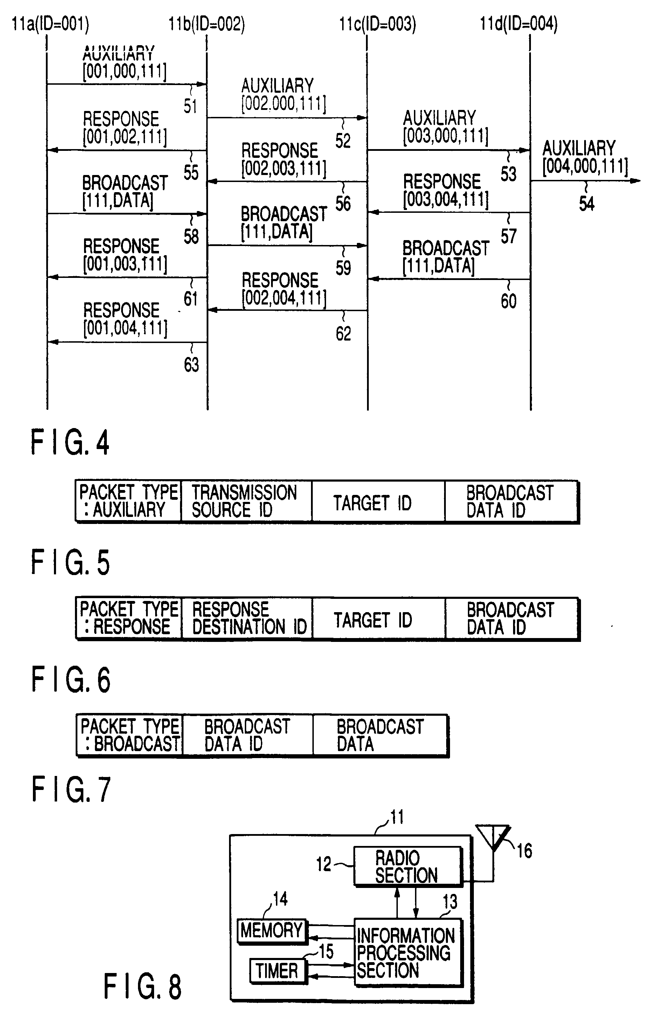

In starting broadcast transmission, the radio communication apparatus 11a as a transmission source transmits an auxiliary message packet (procedure 21). FIG. 5 shows the structure of the auxiliary message packet.

As shown in FIG. 5, the auxiliary message packet consists of a packet type indicating that this packet is an auxiliary message packet, a transmission source ID indicating the ID of the communication apparatus as the transmission source of the auxiliary message packet, a target ID indicating the ID of the target communication apparatus as the final transmission destination, and a broadcast transmission data ID assigned to the broadcast transmission data.

Since the radio communication apparatus 11a is the one that transmits the auxiliary message packet, the transmission source ID of the auxiliary message packet is "001"; the target ID, "004" that indicates the radio communication apparatus 11d as the final transmission destination; and the broadcast transmission data ID, "111".

In procedure 21, the radio communication apparatus 11b receives the auxiliary message packet transmitted from the radio communication apparatus 11a. The radio communication apparatus 11b stores the transmission source ID and broadcast transmission data ID contained in the received auxiliary message packet.

If an auxiliary message packet having the same broadcast transmission data ID as that described above was previously received, since it can be determined that this auxiliary message packet has already been processed, the radio communication apparatus 11b performs no operation.

If the auxiliary message packet having this broadcast transmission data ID is received for the first time, the radio communication apparatus 11b checks whether the target ID of the received auxiliary message packet coincides with the self-ID.

If the target ID does not coincide with the self-ID, the radio communication apparatus 11b determines that this auxiliary message packet is not addressed to the apparatus itself, and transmits the packet to another radio communication apparatus (procedure 22).

In this case, since the transmission source of the auxiliary message packet is the radio communication apparatus 11b, the transmission source ID is replaced with "002" which is the ID of the radio communication apparatus 11b. The target ID and broadcast transmission data ID remain "004" and "111", respectively.

Subsequently, the radio communication apparatus 11c receives the auxiliary message packet transmitted from the radio communication apparatus 11b in procedure 22. The radio communication apparatus 11c stores the transmission source ID and broadcast transmission data ID contained in the received auxiliary message packet.

If an auxiliary message packet having the same broadcast transmission data ID as that described above has previously been received, since it can be determined that the auxiliary message packet having this broadcast transmission data ID has been processed, the radio communication apparatus 11c performs no operation.

If the auxiliary message packet having this broadcast transmission data ID is received for the first time, the radio communication apparatus 11c checks whether the target ID of the received auxiliary message packet coincides with the self-ID.

If the target ID does not coincide with the self-ID, the radio communication apparatus 11c determines that the packet is not addressed to the apparatus itself, and transmits the auxiliary message packet to another radio communication apparatus (procedure 23).

In this case, since the transmission source of the auxiliary message packet is the radio communication apparatus 11c, the transmission source ID is replaced with "003", which is the ID of the radio communication apparatus 11c. The target ID and broadcast transmission data ID remain "004" and "111", respectively.

The radio communication apparatus 11d then receives the auxiliary message packet transmitted from the radio communication apparatus 11c in procedure 23. The radio communication apparatus 11d stores the transmission source ID and broadcast transmission data ID contained in the received auxiliary message packet.

If an auxiliary message packet having the same broadcast transmission data ID as that described above has previously been received, since it can be determined that the auxiliary message packet having this broadcast transmission data ID has been processed, the radio communication apparatus 11d performs no operation.

If the auxiliary message packet having this broadcast transmission data ID is received for the first time, the radio communication apparatus 11d checks whether the target ID of the received auxiliary message packet coincides with the self-ID.

In this case, since the target destination is the radio communication apparatus 11d, the target ID coincides with the self-ID. The radio communication apparatus 11d therefore determines that the auxiliary message packet is addressed to it, and returns a response to the auxiliary message packet.

### (Transmission of Response Message Packet)

Upon receiving the auxiliary message packet from the radio communication apparatus 11c in procedure 23 and confirming that the target ID contained in the packet coincides with the self-ID, the radio communication apparatus 11d transmits a response message packet (procedure 24). FIG. 6 shows the structure of a response message packet.

As shown in FIG. 6, each response message packet consists of a packet type indicating that this packet is a response message packet, a response destination ID indicating a communication apparatus as the response destination of the response message packet, a target ID indicating the ID of a target communication apparatus as a final transmission destination, and a broadcast transmission data ID assigned to the broadcast transmission data.

In this case, since the response destination of the response message packet coincides with the transmission destination ID contained in the received auxiliary message packet, the response ID is "003", which is the ID of the radio communication apparatus 11c. The target ID is "004", which is the self-ID, and the broadcast transmission data ID is "111".

In procedure 24, the radio communication apparatus 11c receives the response message packet transmitted from the radio communication apparatus 11d. The radio communication apparatus 11c stores a combination of the target ID and broadcast transmission data ID contained in the received response message packet.

If a response message packet having the same combination of a target ID and broadcast transmission data ID as that described above has previously been received, since it can be determined that this response message packet has already been processed, the radio communication apparatus 11c performs no operation.

If the response message packet having these target ID and broadcast transmission data ID is received for the first time, the radio communication apparatus 11c checks whether the response destination ID of the received response message packet coincides with the self-ID.

If the response destination ID coincides with the self-ID, the radio communication apparatus 11c determines that it has received a response message packet to be retransmitted, and retransmits the response message packet (procedure 25).

In this case, the response destination ID of the response message packet is replaced with the ID "002" of the radio communication apparatus 11b, which has been stored at the time of the reception of the auxiliary message packet in procedure 22. The target ID and broadcast transmission data ID remain "004" and "111", respectively.

The radio communication apparatus 11b then receives the response message packet transmitted from the radio communication apparatus 11c in procedure 25. The radio communication apparatus 11b stores a combination of the target ID and broadcast transmission data ID contained in the received response message packet.

In this case, if a response message packet having the same combination of a target ID and broadcast transmission data ID as that described above has previously been received, since it can be determined that this response message packet has already been processed, the radio communication apparatus 11b performs no operation.

If the response message packet having these target ID and broadcast transmission data ID is received for the first time, the radio communication apparatus 11b checks whether the response destination ID of the received response message packet coincides with the self-ID.

If the response destination ID coincides with the self-ID, the radio communication apparatus 11b determines that it has received a response message packet to be retransmitted, and retransmits the response message packet (procedure 26).

In this case, the response destination ID of the response message packet is replaced with the ID "001" of the radio communication apparatus 11a, which has been stored at the time of the reception of the auxiliary message packet in procedure 21. The target ID and broadcast transmission data ID remain "004" and "111", respectively.

Subsequently, the radio communication apparatus 11a as the transmission source of the broadcast transmission data receives the response message packet transmitted from the radio communication apparatus 11b in procedure 26. The radio communication apparatus 11a stores the broadcast transmission data ID contained in the received response message packet.

If a response message packet having the same broadcast transmission data ID as that described above has previously been received, since it can be determined that the response message packet having this broadcast transmission data ID has already been processed, the radio communication apparatus 11c performs no operation.

If the response message packet having this broadcast transmission data ID is received for the first time, the radio communication apparatus 11a checks whether the response destination ID of the received response message packet coincides with the self-ID.

In this case, since the response destination ID contained in the response message packet coincides with the self-ID, and the target ID is "004", which indicates the radio communication apparatus 11d, the radio communication apparatus 11a determines that a radio communication route to the target transmission destination (i.e., the radio communication apparatus 11a → 11b → 11c → 11d) has been established. With this operation, the radio communication apparatus 11a transmits the broadcast transmission data packet containing the actual data.

### (Transmission of Broadcast Transmission Data Packet)

When the radio communication apparatus 11a receives a response message packet from the radio communication apparatus 11b and determines that the response destination ID contained in the response message packet coincides with the self-ID and the target ID is "004", which indicates the radio communication apparatus 11d, the radio communication apparatus 11a determines that a radio communication route to the target destination has been established, and transmits the broadcast transmission data packet (procedure 27). FIG. 7 shows the structure of a broadcast transmission data packet.

As shown in FIG. 7, each broadcast transmission data packet consists of a packet type indicating that this packet is a broadcast transmission data packet, a broadcast transmission data ID assigned to the broadcast transmission data, and broadcast transmission data which is the actual data contents.

If no response message packet is returned to the radio communication apparatus 11a which is the transmission source of the broadcast transmission data, the radio communication apparatus 11a determines that a radio communication route to the radio communication apparatus 11d has not been established, and stops broadcast transmission. This saves unnecessary data transmission.

The radio communication apparatus 11b then receives the broadcast transmission data packet transmitted from the radio communication apparatus 11a in procedure 27.

The radio communication apparatus 11b checks whether the broadcast transmission data ID contained in the received broadcast transmission data packet coincides with the broadcast transmission data ID stored at the time of the reception of the response message packet in procedure 25, and the broadcast transmission data packet having this broadcast transmission data is received for the first time.

If a broadcast transmission data packet having the same broadcast transmission data ID as that described above has previously been received, since it can be determined that this broadcast transmission data packet has already been processed, the radio communication apparatus 11b performs no operation.

If the broadcast transmission data IDs coincide with each other, and the broadcast transmission data packet having this broadcast transmission data is received for the first time, the radio communication apparatus 11b determines that it has received a broadcast transmission data packet to be retransmitted, and retransmits the broadcast transmission data packet (procedure 28). In this case, the broadcast transmission data packet to be transmitted has the same contents as those of the broadcast transmission data packet received in procedure 27.

The radio communication apparatus 11c receives the broadcast transmission data packet transmitted from the radio communication apparatus 11b in procedure 28.

The radio communication apparatus 11c checks whether the broadcast transmission data ID contained in the received broadcast transmission data packet coincides with the broadcast transmission data ID stored at the time of the reception of the response message packet in procedure 24, and the broadcast transmission data packet having this broadcast transmission data is received for the first time.

If a broadcast transmission data packet having the same broadcast transmission data ID as that described above has previously been received, since it can be determined that this broadcast transmission data packet has already been processed, the radio communication apparatus 11c performs no operation.

If the broadcast transmission data IDs coincide with each other, and the broadcast transmission data packet having this broadcast transmission data is received for the first time, the radio communication apparatus 11c determines that it has received a broadcast transmission data packet to be retransmitted, and retransmits the broadcast transmission data packet (procedure 29), In this case as well, the broadcast transmission data packet to be transmitted has the same contents as those of the broadcast transmission data packet received in procedure 28.

The radio communication apparatus 11d then receives the broadcast transmission data packet transmitted from the radio communication apparatus 11c in procedure 29. The radio communication apparatus 11d checks whether the broadcast transmission data ID contained in the received broadcast transmission data packet coincides with the broadcast transmission data ID stored at the time of the reception of the response message packet in procedure 24.

In this case, the two broadcast transmission data IDs are "111" and coincide with each other, the radio communication apparatus 11d has recognized itself as the target communication apparatus of the broadcast transmission data packet from the auxiliary message packet received in procedure 23.

The radio communication apparatus 11d therefore determines that it has received a broadcast transmission data packet addressed to the apparatus itself, receives the data, and terminates the communication processing.

The procedures for performing broadcast transmission when one radio communication apparatus is designated as a target have been described above. However, a plurality of radio communication apparatuses can be designated as targets.

Procedures for performing broadcast transmission when two radio communication apparatuses are set as target communication apparatuses will be described below.

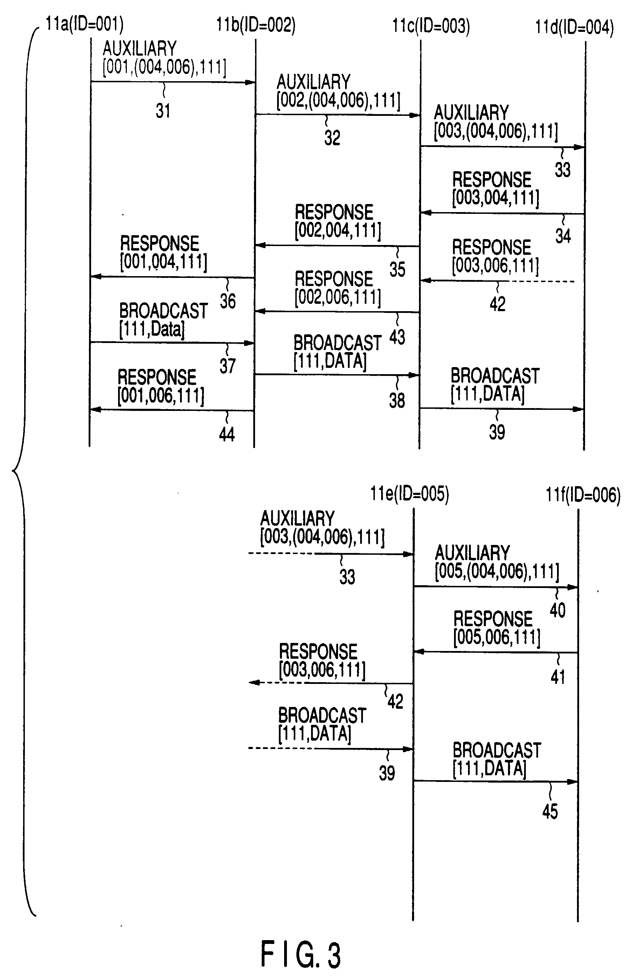

FIG. 3 is a sequence diagram showing the procedures for performing broadcast transmission when two radio communication apparatuses are set as target communication apparatuses. In the case shown in FIG. 3, the two radio communication apparatuses 11d and 11f are set as final transmission targets.

According to the procedures shown in FIG. 3, the radio communication apparatus 11a is the transmission source of broadcast transmission data, and the broadcast transmission data is sequentially transmitted from the radio communication apparatus 11a to the radio communication apparatus 11b, from the radio communication apparatus 11b to the radio communication apparatus 11c, from the radio communication apparatus 11c to the radio communication apparatuses 11d and 11e, and from the radio communication apparatus 11e to the radio communication apparatus 11f.

Assume that the ID assigned to the radio communication apparatus 11a is "001"; the ID assigned to the radio communication apparatus 11b, "002"; the ID assigned to the radio communication apparatus 11c, "003", the ID assigned to the radio communication apparatus 11d, "004"; the ID assigned to the radio communication apparatus 11e, "005", and the ID assigned to the radio communication apparatus 11f, "006". Assume also that an ID indicating the broadcast transmission data is "111".

### (a) Processing for First Target Destination (Radio Communication Apparatus 11d)

First of all, the radio communication apparatus 11a, which is to perform broadcast transmission, transmits an auxiliary message packet (procedure 31). In this case, since the radio communication apparatus 11a transmits the auxiliary message packet, the transmission source ID of the auxiliary message packet in FIG. 5 is "001", the target IDs are "004" and "006", which are the IDs of the radio communication apparatuses 11d and 11f, respectively. The broadcast transmission data ID is "111".

Note that transmission/reception processing for the auxiliary message packet in each radio communication apparatus in procedures 31, 32, and 33 shown in FIG. 3 is the same as that described with reference to procedures 21, 22, and 23 shown in FIG. 2.

In procedure 33, when the auxiliary message packet is transmitted from the radio communication apparatus 11c, the radio communication apparatus 11d receives the auxiliary message packet to store the transmission source ID and broadcast transmission data ID contained in the auxiliary message packet in advance.

If an auxiliary message packet having the same broadcast transmission data ID as that described above has previously been received, since it can be determined that the auxiliary message packet having this broadcast transmission data ID has already been processed, the radio communication apparatus 11d performs no operation.

If the auxiliary message packet having this broadcast transmission data ID is received for the first time, the radio communication apparatus 11d checks whether the target ID of the received auxiliary message packet coincides with the self-ID.

In this case, since the ID "004" of the radio communication apparatus 11d and the ID "006" of the radio communication apparatus 11f are designated as target IDs, and the self-ID is included in the target IDs, the radio communication apparatus 11d determines that the auxiliary message packet is addressed to the apparatus itself, and returns a response to the auxiliary message packet.

Upon receiving the auxiliary message packet transmitted from the radio communication apparatus 11c in procedure 33, the radio communication apparatus 11d confirms that one of the target IDs contained in the auxiliary message packet coincides with the self-ID, and transmits a response message packet in response to the auxiliary message packet (procedure 34).

In this case, since the transmission destination of the response message packet is the transmission source ID contained in the auxiliary message packet received in procedure 33, the response destination ID of the response message packet in FIG. 6 is set to "003", which is the ID of the radio communication apparatus 11c, and the target ID is set to "004", which is the self-ID. The broadcast transmission data ID is "111".

Note that transmission/reception processing for the response message packet in each radio communication apparatus in procedures 34, 35, and 36 shown in FIG. 3 is the same as that in procedures 24, 25, and 26 shown in FIG. 2.

When the response message packet is transmitted from the radio communication apparatus 11b in procedure 36, the radio communication apparatus 11a as the transmission source of the broadcast transmission data receives the response message packet to store the broadcast transmission data ID contained in the response message packet in advance.

If a response message packet having the same broadcast transmission data ID as that described above has previously been received, since it can be determined that the response message packet having this broadcast transmission data ID has already been processed, the radio communication apparatus 11a performs no operation.

If the response message packet having this broadcast transmission data ID is received for the first time, the radio communication apparatus 11a checks whether the response destination ID of the received response message packet coincides with the self-ID.

In this case, since the response destination ID contained in the response message packet coincides with the self-ID, and the target ID is "004", which indicates the radio communication apparatus 11d, the radio communication apparatus 11a determines that a radio communication route to the target transmission destination (i.e., the radio communication apparatus 11a → 11b → 11c → 11d) has been established.

With this operation, the radio communication apparatus 11a transmits the broadcast transmission data packet containing the actual data.

Upon receiving the response message packet from the radio communication apparatus 11b and confirming that the response destination ID contained in the response message packet coincides with the self-ID and the target ID is "004", which indicates the radio communication apparatus 11d, the radio communication apparatus 11a determines that a radio communication route has been established, and transmits the broadcast transmission data packet (procedure 37).

In this case, the broadcast transmission data ID of the broadcast transmission data packet shown in FIG. 7 is "111".

Note that transmission/reception processing for the broadcast transmission data packet in each radio communication apparatus in procedures 37, 38, and 39 shown in FIG. 3 is the same as that in procedures 27, 28, and 29 shown in FIG. 2.

Upon receiving the broadcast transmission data packet transmitted from the radio communication apparatus 11c in procedure 39, the radio communication apparatus 11d checks whether the broadcast transmission data ID contained in the broadcast transmission data packet coincides with the broadcast transmission data ID stored at the time of the reception of the response message packet in procedure 34.

In this case, the two broadcast transmission data IDs are "111" and coincide with each other, the radio communication apparatus 11d has recognized itself as the target communication apparatus of the broadcast transmission data packet from the auxiliary message packet received in procedure 33.

The radio communication apparatus 11d therefore determines that it has received a broadcast transmission data packet addressed to the apparatus itself, receives the data, and terminates the communication processing.

### (b) Processing for Second Target Destination (Radio Communication Apparatus 11f)

In procedure 33, the auxiliary message packet transmitted from the radio communication apparatus 11c in procedure 33 is received by the radio communication apparatus 11e with which direct radio communication can be performed, in addition to the radio communication apparatus 11d.

Upon receiving the auxiliary message packet transmitted from the radio communication apparatus 11c in procedure 33, the radio communication apparatus 11e stores the transmission source ID and broadcast transmission data ID contained in the auxiliary message packet in advance.

If an auxiliary message packet having the same broadcast transmission data ID as that described above has previously been received, since it can be determined that the auxiliary message packet having this broadcast transmission data ID has already been processed, the radio communication apparatus 11e performs no operation.

If the auxiliary message packet having this broadcast transmission data ID is received for the first time, the radio communication apparatus 11e checks whether the target ID of the received auxiliary message packet coincides with the self-ID.

If the target ID does not coincide with the self-ID, the radio communication apparatus 11e determines that the auxiliary message packet is not addressed to the apparatus itself, and transmits the packet to another radio communication apparatus (procedure 40).

In this case, since the transmission source of the auxiliary message packet is the radio communication apparatus 11e, the transmission source ID is replaced with "005", which is the ID of the radio communication apparatus 11e. The target IDs and broadcast transmission data ID remain "004", "006", and "111", respectively.

The radio communication apparatus 11f receives the auxiliary message packet transmitted from the radio communication apparatus 11e in procedure 40. The radio communication apparatus 11f stores the transmission source ID and broadcast transmission data ID contained in the auxiliary message packet in advance.

In this case, if an auxiliary message packet having the same broadcast transmission data ID as that described above has previously been received, since it can be determined that the auxiliary message packet having this broadcast transmission data ID has already been processed, the radio communication apparatus 11f performs no operation.

If the auxiliary message packet having this broadcast transmission data ID is received for the first time, the radio communication apparatus 11f checks whether one of the target IDs of the received auxiliary message packet coincides with the self-ID.

In this case, since the ID "004" of the radio communication apparatus 11d and the ID "006" of the radio communication apparatus 11f are designated as target IDs, and the self-ID is included in the target IDs, the radio communication apparatus 11f determines that the auxiliary message packet is addressed to the apparatus itself, and returns a response to the auxiliary message packet.

Upon receiving the auxiliary message packet from the radio communication apparatus 11e, and confirming that one of the target IDs contained in the auxiliary message packet coincides wit the self-ID, the radio communication apparatus 11f transmits a response message packet in response to the auxiliary message packet (procedure 41).

In this case, since the transmission source of the response message packet is the transmission source ID contained in the auxiliary message packet received in procedure 40, the response destination ID of the response message packet shown in FIG. 6 is set to "005", which is the ID of the radio communication apparatus 11e, and the target ID is set to "006", which is the self-ID. The broadcast transmission data ID is "111".

Note that transmission/reception processing for the response message packet in each radio communication apparatus in procedures 41, 42, 43, and 44 shown in FIG. 3 is the same as that in procedures 24, 25, and 26 shown in FIG. 2.

When the response message packet is transmitted from the radio communication apparatus 11b in procedure 44, the radio communication apparatus 11a as the transmission source of the broadcast transmission data receives the response message packet to store the broadcast transmission data ID contained in the response message packet in advance.

In this case, since the response message packet with the target destination ID being set to "006" is received, the radio communication apparatus 11a determines that a radio communication route to the target transmission destination (i.e., the radio communication apparatus 11a → 11b → 11c → 11d → 11e → 11f) has been established.

In this case, since the broadcast transmission data packet has already been transmitted in procedure 37 in association with the broadcast transmission data ID contained in the response message packet, no broadcast transmission data packet is transmitted with respect to the response message packet received in procedure 44. This can save unnecessary data transmission and suppress power consumption in battery driving operation.

In procedure 39, the broadcast transmission data packet transmitted from the radio communication apparatus 11c is received by the radio communication apparatus 11e, with this direct radio communication, in addition to the radio communication apparatus 11d.

Upon receiving the broadcast transmission data packet transmitted from the radio communication apparatus 11c in procedure 39, the radio communication apparatus 11e checks whether the broadcast transmission data ID contained in the broadcast transmission data packet coincides with the broadcast transmission data ID stored at the time of the reception of the response message packet in procedure 41, and the broadcast transmission data packet having this broadcast transmission data is received for the first time.

If a broadcast transmission data packet having the same broadcast transmission data ID as that described above has previously been received, since it can be determined that this broadcast transmission data packet has already been processed, the radio communication apparatus 11b performs no operation.

If the broadcast transmission data IDs coincide with each other, and the broadcast transmission data packet having this broadcast transmission data is received for the first time, the radio communication apparatus 11e determines that it has received a broadcast transmission data packet to be retransmitted, and retransmits the broadcast transmission data packet (procedure 45).

In this case, the broadcast transmission data packet to be transmitted has the same contents as those of the broadcast transmission data packet received in procedure 39.

Subsequently, the radio communication apparatus 11f receives the broadcast transmission data packet transmitted from the radio communication apparatus 11e in procedure 45. The radio communication apparatus 11f checks whether the broadcast transmission data ID contained in the received broadcast transmission data packet coincides with the broadcast transmission data ID stored at the time of the reception of the response message packet in procedure 41.

In this case, the two broadcast transmission data IDs are "111" and coincide with each other, and the radio communication apparatus 11f has recognized itself as the target communication apparatus of the broadcast transmission data packet from the auxiliary message packet received in procedure 40.

The radio communication apparatus 11f therefore determines that it has received a broadcast transmission data packet addressed to the apparatus itself, receives the data, and terminates the communication processing.

The case wherein two target communication apparatuses are set has been described above. Even if, however, three or more target IDs are set, broadcast transmission can be performed with respect to the target radio communication apparatuses by the same operation as described above.

In addition, broadcast transmission can be performed with respect to all radio communication apparatuses in the radio network without specifying any radio communication apparatus as a target. Procedures for performing broadcast transmission with respect to all radio communication apparatuses in the radio network will be described below.

FIG. 4 is a sequence diagram showing procedures for performing broadcast transmission with respect to all radio communication apparatuses in the radio network. In the procedures shown in FIG. 4, the radio communication apparatus 11a is the transmission source of broadcast transmission data, and the broadcast transmission data is sequentially broadcast from the radio communication apparatus 11a to the radio communication apparatus 11b, from the radio communication apparatus 11b to the radio communication apparatus 11c, and from the radio communication apparatus 11c to the radio communication apparatus 11d.

Assume that the ID (Identification Information) assigned to the radio communication apparatus 11a is "001"; the ID assigned to the radio communication apparatus 11b, "002"; the ID assigned to the radio communication apparatus 11c, "003"; and the ID assigned to the radio communication apparatus 11d, "004". Assume also that the ID assigned to the broadcast transmission data is "111".

In starting broadcast transmission, the radio communication apparatus 11a transmits an auxiliary message packet first (procedure 51). In this case, since the radio communication apparatus 11a transmits the auxiliary message packet, the transmission source ID of the auxiliary message packet shown in FIG. 5 is "001".

In addition, as a target ID, an ID common to all the radio communication apparatuses is designated. Assume that "000" is the ID that indicates all the radio communication apparatuses. The broadcast transmission data ID is "111".

The radio communication apparatus 11b then receives the auxiliary message packet transmitted from the radio communication apparatus 11a in procedure 51. The radio communication apparatus 11b stores the transmission source ID and broadcast transmission data ID contained in the received auxiliary message packet.

In this case, if an auxiliary message packet having the same broadcast transmission data ID as that described above has previously been received, since it can be determined that the auxiliary message packet having this broadcast transmission data ID has already been processed, the radio communication apparatus 11b performs no operation.

If the auxiliary message packet having this broadcast transmission data ID is received for the first time, the radio communication apparatus 11b checks whether the target ID of the received auxiliary message packet coincides with the self-ID.

In this case, the target ID "000" indicates all the radio communication apparatuses and, hence each radio communication apparatus transmits the auxiliary message packet and a response message packet upon reception of the auxiliary message packet containing the target ID "000".

That is, upon receiving the auxiliary message packet containing the target ID "000" from the radio communication apparatus 11a, the radio communication apparatus 11b transmits the auxiliary message packet first (procedure 52).

In this case, since the transmission source of the auxiliary message packet is the radio communication apparatus 11b, the transmission source ID is replaced with "002", which is the ID of the radio communication apparatus 11b. The target ID and broadcast transmission data ID remain "000" and "111", respectively.

Subsequently, the radio communication apparatus 11b transmits the response message packet (procedure 55). In this case, the response destination of the response message packet shown in FIG. 6 is the transmission source ID "001" contained in the auxiliary message packet received in procedure 51, and the target ID is "002", which is the self-ID. The broadcast transmission data ID remains "111".

The radio communication apparatus 11c then receives the auxiliary message packet transmitted form the radio communication apparatus 11b in procedure 52. The radio communication apparatus 11c performs the same processing as that performed by the radio communication apparatus 11b that has received the auxiliary message packet in procedure 51, and transmits the auxiliary message packet in procedure 53, and a response message packet in procedure 56.

In this case, the transmission source ID of the auxiliary message packet is "003", which is the self-ID, and the target ID and broadcast transmission data ID remain "001" and "111", respectively.

The response destination ID of the response message packet is "002", which indicates the radio communication apparatus 11b as the transmission source of the auxiliary message packet in procedure 52. The target ID is "003", which is the self-ID, and the broadcast transmission data ID remains "111".

The radio communication apparatus 11d receives the auxiliary message packet transmitted from the radio communication apparatus 11c in procedure 53.

The radio communication apparatus 11d performs the same processing as that performed by the radio communication apparatus 11b that has received the auxiliary message packet in procedure 51, and transmits the auxiliary message packet in procedure 54, and a response message packet in procedure 57.

In this case, the transmission source ID of the auxiliary message packet is "004", which is the self-ID, and the target ID and broadcast transmission data ID remain "000" and "111", respectively.

The response destination ID of the response message packet is "003", which indicates the radio communication apparatus 11c as the transmission source of the auxiliary message packet in procedure 53, the target ID is "004", which is the self-ID, and the broadcast transmission data ID remains "111".

In this case, the radio communication apparatus 11a as the transmission source of the broadcast transmission data receives the response message packet transmitted from the radio communication apparatus 11b in procedure 55 to store the broadcast transmission data ID contained in the response message packet in advance.

If a response message packet having the same broadcast transmission data ID as that described above has previously been received, since it can be determined that the response message packet having this broadcast transmission data ID has already been processed, the radio communication apparatus 11a performs no operation.

If the response message packet having this broadcast transmission data ID is received for the first time, the radio communication apparatus 11a checks whether the response destination ID of the received response message packet coincides with the self-ID.

If the response destination ID contained in the response message packet coincides with the self-ID, the radio communication apparatus 11a determines that a transmission request for broadcast transmission data is received, and transmits the broadcast transmission data packet having the broadcast transmission data ID "111" (procedure 58).

The radio communication apparatus 11b then receives the broadcast transmission data transmitted from the radio communication apparatus 11a in procedure 58. The radio communication apparatus 11b checks whether the broadcast transmission data ID contained in the received broadcast transmission data packet coincides with the broadcast transmission data ID stored at the time of the reception of the response message packet in procedure 56, and the broadcast transmission data packet having this broadcast transmission data is received for the first time.

If a broadcast transmission data packet having the same broadcast transmission data ID as that described above has previously been received, since it can be determined that the broadcast transmission data packet has already been processed, the radio communication apparatus 11b performs no operation.

If the broadcast transmission data IDs coincide with each other, and the broadcast transmission data packet having this broadcast transmission data is received for the first time, the radio communication apparatus 11b determines that it has received a broadcast transmission data packet to be retransmitted, and retransmits the broadcast transmission data packet (procedure 59). In this case, the broadcast transmission data packet to be transmitted has the same contents as those of the broadcast transmission data packet received in procedure 58.

The above description applies to the radio communication apparatuses 11c and 11d. That is, each apparatus receives the broadcast transmission data packet having the broadcast transmission data ID "111" in procedure 59 or 60, and checks whether the broadcast transmission data ID contained in the received broadcast transmission data packet coincides with the broadcast transmission data ID stored at the time of reception of the response message packet, and the broadcast transmission data packet having this broadcast transmission data is received for the first time.

If a broadcast transmission data packet having the same broadcast transmission data ID as that described above has previously been received, since the broadcast transmission data packet has already been processed, no operation is performed.

If the broadcast transmission data IDs coincide with each other, and the broadcast transmission data packet having this broadcast transmission data is received for the first time, each apparatus determines that it has received a broadcast transmission data packet to be retransmitted, and retransmits the broadcast transmission data packet.

The radio communication apparatus 11b receives the response message packet transmitted from the radio communication apparatus 11c in procedure 56. The radio communication apparatus 11b transmits a response message packet whose response destination ID is set to the transmission source ID "001" of the auxiliary message packet received in procedure 51 (procedure 61).

The radio communication apparatus 11c receives the response message packet transmitted from the radio communication apparatus 11d in procedure 57. The radio communication apparatus 11c transmits a response message packet whose response destination ID is set to the transmission source ID "002" of the auxiliary message packet received in procedure 52 (procedure 62).

The radio communication apparatus 11b receives the response message packet transmitted from the radio communication apparatus 11c in procedure 62. The radio communication apparatus 11b transmits a response message packet whose response destination ID is set to the transmission source ID "001" of the auxiliary message packet received in procedure 51 (procedure 63).

Although the radio communication apparatus 11a receives response message packets in procedures 61 and 63, since the apparatus has already received a response message packet in procedure 55, it transmits no broadcast transmission data packet.

In the case shown in FIG. 4, since the radio communication apparatus 11d serves as a terminating terminal, no response message packet is returned to the radio communication apparatus 11d, and the apparatus 11d does not retransmit the broadcast transmission data received in procedure 60. If, however, the radio communication apparatus 11d receives a response message packet from another radio communication apparatus, the apparatus 11d retransmits the received broadcast transmission data packet in procedure 60.

Broadcast transmission between four radio communication apparatuses has been described above. By repeating the above procedures between the respective radio communication apparatuses, broadcast transmission can be performed without imposing any limitation on the number of radio communication apparatuses.

Although FIGS. 2 to 4 show the cases wherein broadcast transmission is started from the radio communication apparatus 11a serving as a transmission source, any radio communication apparatus in the radio network can serve as an apparatus that starts broadcast transmission.

By performing broadcast transmission according to the procedures described above, without requiring the respective terminals to exchange terminal information in the radio network in advance, broadcast transmission can be started only when a communication route to target terminals has been established.

In addition, broadcast transmission can be performed to all terminals in a radio network without imposing any limitation on the number of terminals to which data can be broadcast.

The arrangement and processing operation of a radio communication apparatus that implements the above broadcast transmission will be described in detail next.

FIG. 8 is a block diagram showing the arrangement of a radio communication apparatus according to the present invention.

The arrangement of a radio communication apparatus 11 in FIG. 8 is the same as that of each of the radio communication apparatuses 11a to 11f in FIG. 1. This radio communication apparatus 11 is, for example, a portable PC having a radio communication function and includes a radio section 12, information processing section 13, memory 14, timer 15, and antenna 16.

The radio section 12 transmits/receives data packets by radio to/from other radio communication apparatuses through the antenna 16 mounted on this apparatus. The information processing section 13 is formed by a microprocessor for controlling the overall apparatus, and performs various processes in accordance with the programs stored in the memory 14. In this case, the information processing section 13 executes a series of operations associated with broadcast transmission through the radio section 12.

The memory 14 is a ROM, RAM, or the like and stores various kinds of information including programs for operating this apparatus.

This memory 14 is also used as a memory for storing various kinds of ID information and actual data contained in the above auxiliary message packet (see FIG. 5), response message packet (see FIG. 6), and broadcast transmission data packet (se FIG. 7).

The timer 15 is used to set various process times in the information processing section 13.

The processing performed by each radio communication apparatus according to the present invention will be described next assuming that in the radio network shown in FIG. 1, the radio communication apparatus 11a serves as a transmission source, and the radio communication apparatus 11d serves as a transmission destination. Consider (a) the processing performed by the radio communication apparatus as the transmission source, and (b) the processing performed by radio communication apparatuses other than the transmission source, separately.

### (a) Processing Performed by Radio Communication Apparatus as Transmission Source

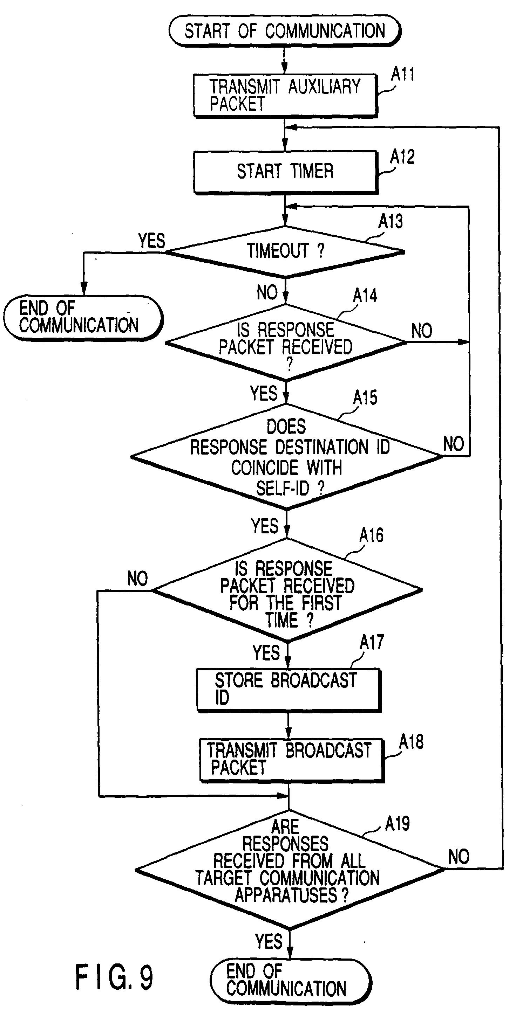

FIG. 9 is a flow chart showing the processing performed by the radio communication apparatus as the transmission source which starts broadcast transmission. Referring to Fig. 9, "auxiliary packet" stands for an auxiliary message packet; "response packet", a response message packet; "broadcast packet", a broadcast transmission data packet; and "broadcast ID", a broadcast transmission data ID.

In starting broadcast transmission, the radio communication apparatus 11a transmits an auxiliary message packet first (step A11).

More specifically, the information processing section 13 in FIG. 8 generates an auxiliary message packet consisting of a transmission source ID, target ID, and broadcast transmission data ID, and transmits it through the radio section 12.

In this case, the transmission source ID is "001", which is the self-ID, the target ID is "004", which is the ID of the radio communication apparatus 11d, and the broadcast transmission data ID is "111".

Upon transmission of the auxiliary message packet, the radio communication apparatus 11a starts the timer 15 (step A12).

In this timer 15, a predetermined period of time is set. The radio communication apparatus 11a monitors whether a response message packet is returned in this period of time (steps A13 and A14).

When the timer 15 causes a timeout, i.e., no response message packet is returned to the radio communication apparatus 11a within the predetermined period of time (YES in step A13), the radio communication apparatus 11a determines that there is no other radio communication apparatus near the radio communication apparatus 11a, with which communication can be performed, and terminates the communication processing.

If a response message packet is returned from another radio communication apparatus before a timeout occurs in the timer 15, i.e., a response message packet is received within the predetermined period of time after the transmission of the auxiliary massage packet (YES in step A14), the radio communication apparatus 11a checks whether the response destination ID contained in the response message packet coincides with the self-ID "001" (step A15).

If the response destination ID does not coincide with the self-ID, the radio communication apparatus 11a determines that the received packet is not a response to the auxiliary message packet transmitted by the apparatus itself. The flow then returns to step A13 to wait for a response message packet addressed to the apparatus 11a within the time set in the timer 15.

If the response destination ID contained in the received response message packet coincides with the self-ID "001", the radio communication apparatus 11a determines that the received packet is a response message packet corresponding to the auxiliary message packet transmitted by the apparatus 11a (YES in step A15).

In this case, the radio communication apparatus 11a compares the broadcast transmission data ID of the response message packet with the broadcast transmission data ID stored in the memory 14 to check whether the response message packet having the ID "111" of the data to be transmitted by the apparatus 11a is received for the first time (step A16).

If this packet is received for the first time (YES in step A16), the radio communication apparatus 11a stores the broadcast transmission data ID of the received response message packet in the memory 14 first (step A17), and then transmits a broadcast transmission data packet containing the broadcast transmission data ID "111" and actual data (step A18). If this packet is not received for the first time (NO in step A16), since the packet has already been processed, no operation is performed.

Subsequently, the radio communication apparatus 11a checks whether response message packets are returned from all the target communication apparatuses (only the radio communication apparatus 11d in this case) designated by the auxiliary message packet (step A19).

If response message packets from all the target communication apparatuses are returned (YES in step A19), the communication is terminated. If there is any target communication apparatus that has returned no response message packet (NO in step A19), the flow returns to step A12 to start the timer 15 again and wait for a response message packet.

### (b) Processing Performed by Radio Communication Apparatuses Other than Transmission Source

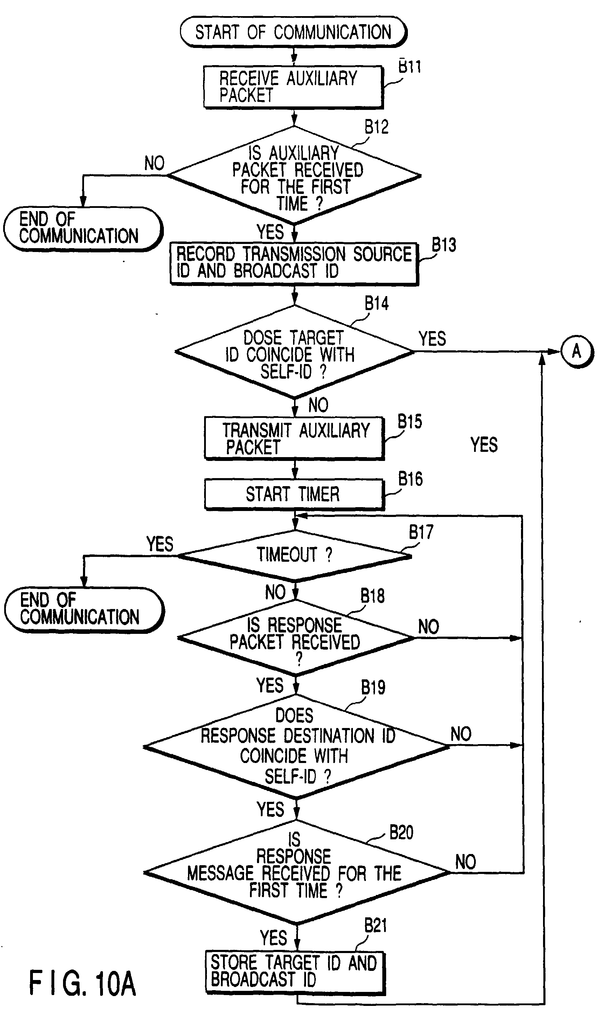

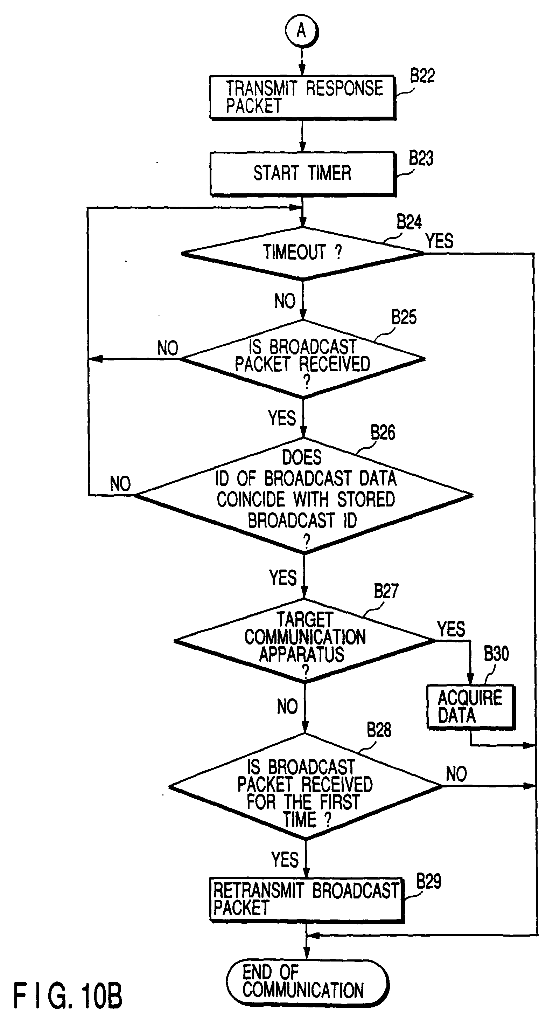

FIGS. 10A and 10B are flow charts showing the processing performed by a radio communication apparatus that receives and retransmits broadcast transmission data.

Referring to FIGS. 10A and 10B, as in FIG. 9, "auxiliary packet" stands for an auxiliary message packet; "response packet", a response message packet; "broadcast packet", a broadcast transmission data packet; and "broadcast ID", a broadcast transmission data ID.

Consider the radio communication apparatus 11a as a transmission source, and the radio communication apparatus 11b with which direct communication can be performed. Upon receiving an auxiliary message packet transmitted from the radio communication apparatus 11a (step B11), the radio communication apparatus 11b checks whether the received auxiliary message packet is a packet that is received for the first time (step B12).

More specifically, upon receiving the auxiliary message packet transmitted from the radio communication apparatus 11a through the radio section 12 in FIG. 8, the radio communication apparatus 11b compares the broadcast transmission data ID contained in the auxiliary message packet with the broadcast transmission data ID stored in the memory 14 to check whether the two IDS coincide with each other, thereby checking whether the packet is received for the first time.

If the packet is not received for the first time, i.e., an auxiliary message packet containing the same broadcast transmission data ID has previously been received (NO in step B12), it is determined that there is no need to retransmit the packet, and the communication is terminated.

If it is determined that this packet is received for the first time, i.e., any packet containing the same broadcast transmission data ID has not been received (YES in step B12), the radio communication apparatus 11b determines that the auxiliary message packet must be retransmitted, and stores the transmission source ID and broadcast transmission data ID contained in the received auxiliary message packet in the memory 14 (step B13).

The radio communication apparatus 11b compares the target ID contained in the received auxiliary message packet with the self-ID to check whether they coincide with each other. In this case, since the target destination is the radio communication apparatus 11d, the two IDs do not coincide with each other. The flow therefore advances to step B15.

If the transmission destination is the radio communication apparatus 11d, the flow advances to step B22 to compare the target ID contained in the auxiliary message packet with the self-ID.

In step B15, the radio communication apparatus 11b generates a new auxiliary message packet in which the transmission source ID is set to the self-ID "002", and the target ID and broadcast transmission data ID are respectively set to the IDs "004" and "111" contained in the received auxiliary message packet, and transmits the new packet (step B15).

After the transmission of the auxiliary message packet, the radio communication apparatus 11b starts the timer 15 (step B16) to monitor whether a response is received within a predetermined period of time (steps B17 and B18).

If the timer 15 causes a timeout, i.e., no response message packet is returned to the radio communication apparatus 11b within the predetermined period of time (YES in step B17), the radio communication apparatus 11b determines that there is no other radio communication apparatus near the radio communication apparatus 11b, with which communication can be performed, and terminates the communication.

If a response message packet is returned from another radio communication apparatus before the timer 15 causes a timeout, i.e., a response message packet is received within the predetermined period of time after the transmission of the auxiliary message packet (YES in step B18), the radio communication apparatus 11b checks whether the response destination ID contained in the response message packet coincides with the self-ID "002" (step B19).

If the response destination ID does not coincide with the self-ID, the radio communication apparatus 11b determines that this packet is not a response to the auxiliary message packet transmitted from the apparatus itself. The flow then returns to step B17 to wait for a response message packet addressed to the apparatus 11b within the time set in the timer 15 again.

If the response destination ID contained in the received response message packet coincides with the self-ID "002", the radio communication apparatus 11b determines that the received packet is a response message packet corresponding to the auxiliary message packet transmitted from the apparatus 11b (YES in step B19).

In this case, the radio communication apparatus 11b compares the target ID contained in the received response message packet with each ID stored in the memory 14 to check whether the response message packet having a combination of the target ID and the broadcast transmission data ID is received for the first time (step B20). If this packet is received for the first time, a combination of the target ID and broadcast transmission data ID contained in the response message packet is stored in the memory 14 (step B21). The flow then advances to step B22.

In step B22, the radio communication apparatus 11b generates a new response message packet in which the response destination ID is set to the transmission source ID stored in the memory 14 in step B13, and the target ID and broadcast transmission data ID are set to the respective IDs contained in the response message packet received in step B18, and transmits this packet.

After the transmission of the response message packet, the radio communication apparatus 11b starts the timer 15 (step B23), and monitors whether a broadcast transmission data packet is received within a predetermined period of time (steps B24 and B25).

If the timer 15 causes a timeout, i.e., no broadcast transmission data packet is sent to the radio communication apparatus 11b within the predetermined period of time (YES in step B25), the radio communication apparatus 11b determines that data cannot be received owing to a communication state or the like, and terminates the communication.

If a broadcast transmission data packet is sent from another radio communication apparatus and received before a timeout occurs in the timer 15 (YES in step B25), the radio communication apparatus 11b checks whether the broadcast transmission data ID contained in the broadcast transmission data packet coincides with the self-ID "002" (step B26).

If the response destination ID does not coincide with the self-ID, the radio communication apparatus 11b determines that the broadcast transmission data packet is not addressed to the apparatus itself. The flow then returns to step B24 to wait for a broadcast transmission data packet addressed to the apparatus 11b within the time set in the timer 15 again.

Upon receiving a broadcast transmission data packet addressed to the radio communication apparatus 11b (YES in step B26), the apparatus 11b checks on the basis of the target ID contained in the broadcast transmission data packet whether the apparatus itself is a target communication apparatus (step B27).

If the radio communication apparatus 11b is a target communication apparatus, it indicates that the broadcast transmission data packet is successfully received. In this case, therefore, the radio communication apparatus 11b acquires the actual data contained in the packet (step B30), and terminates the communication.

In this case, since the target ID is "004", when the radio communication apparatus 11d receives the broadcast transmission data packet, the broadcast transmission is completed. If it is determined on the basis of the target ID contained in the broadcast transmission data packet that the apparatus is not a target communication apparatus, the flow advances to step B28.

In step B28, the radio communication apparatus 11b compares the broadcast transmission data ID contained in the received broadcast transmission data packet with the broadcast transmission data ID stored in the memory 14 in step B21 to check whether the broadcast transmission data packet having this broadcast transmission data ID is received for the first time.

If a broadcast transmission data packet having the same broadcast transmission data ID as that described above has previously been received (YES in step B28), the radio communication apparatus 11b terminates the communication without retransmitting any broadcast transmission data packet.

If the broadcast transmission data packet having this broadcast transmission data ID is received for the first time (YES in step B28), the radio communication apparatus 11b retransmits the broadcast transmission data packet having the same broadcast transmission data ID and broadcast transmission data as those of the broadcast transmission data packet received in step B25 (step B29), and terminates the communication.

In this manner, each radio communication apparatus in the radio network repeatedly executes the above processing, thereby performing broadcast transmission to all target radio communication apparatuses or all radio communication apparatuses in the radio network.

In this case, first of all, an auxiliary message packet is transmitted. When a response to this packet is received, it is determined that a communication route to a target destination has been established. A broadcast transmission data packet containing actual data is then transmitted.

Each radio communication apparatus repeatedly retransmits the broadcast transmission data packet while comparing the broadcast transmission data ID contained in the broadcast transmission data packet with the broadcast transmission data ID stored at the time of the reception of a response message packet, thereby implementing broadcast transmission.

Broadcast transmission can therefore be performed, without periodically exchanging pieces of information of neighboring terminals as in the prior art, only when a communication route to a target radio communication apparatus has been established at the start of broadcast transmission. In addition, no limitation is imposed on the number of terminals to which data is broadcast.

The techniques described in the above embodiment may be stored, as programs that can be executed by a computer having a radio communication function, in a recording medium such as a magnetic disk (floppy disk, hard disk, or the like), optical disk (CD-ROM, DVD, or the like), or semiconductor memory and applied to various devices. Alternatively such programs may be transmitted through a communication medium to be applied to various devices. A computer that implements this apparatus loads the programs recorded on a recording medium, and the operation of the computer is controlled by the loaded programs, thereby executing the above processing.

As has been described above, according to the present invention, in starting broadcast transmission, an auxiliary message packet is transmitted first, and then it is determined upon reception of a response from a target destination that a communication route has been established. Thereafter, actual data is transmitted. Without periodically exchanging pieces of information of neighboring terminals, therefore, broadcast transmission can be performed only when a communication route is established.

The maximum communicative time of a battery-driven terminal can therefore be prolonged by suppressing power consumption. In addition, broadcast transmission can be performed without limiting the number of terminals to which data can be broadcast.

## Claims

1. A radio communication apparatus characterized by comprising:
first transmission means (A11) for transmitting a first transmission packet that designates at least one of radio communication apparatuses as target destinations in starting broadcast transmission;
means (A14) for receiving response packets sent from radio communication apparatuses which directly communicate with each other after the first transmission packet is transmitted from said first transmission means;
means (A15) for determining on the basis of the received response packets means whether a communication route to said radio communication apparatus as the target destination is established; and
second transmission means (A18) for transmitting a broadcast transmission data packet containing data to be broadcast when the determined determination result indicates that the communication route to at least one of said radio communication apparatuses as the target destinations is established.

2. An apparatus according to claim 1, characterized by further comprising means (B24) for stopping broadcast transmission when no response packet is received from all of the at least one of said radio communication apparatuses as the target destinations within a predetermined period of time after transmission of the first transmission packet.

3. An apparatus according to claim 1,
characterized by further comprising means (A19) for terminating broadcast transmission processing when a response packet is received from at least one of said all radio communication apparatuses as the target destinations.

4. An apparatus according to claim 1,
characterized in that said determining means determines that a communication route to said radio communication apparatus as the target destination is established, when identification information contained in the response packet and indicating a response destination coincides with identification information indicating said self-apparatus.

5. An apparatus according to claim 4,
characterized in that
said determining means further comprises:
means for determining whether the response packet is a response packet that is received for the first time, when the identification information contained in the response packet and indicting the response destination coincides with the identification information indicating said self-apparatus; and
means for storing identification information indicating broadcast transmission data contained in the response packet when it is determined that the response packet is not a response packet that is received for the first time.

6. An apparatus according to claim 1,
characterized in that the first transmission packet contains identification information indicating said self-apparatus, identification information indicating said radio communication apparatus as the target destination, and identification information indicating broadcast transmission data.

7. An apparatus according to claim 1,
characterized in that the second transmission packet contains identification information indicating a response destination, identification information indicating said radio communication apparatus as the target destination, and identification information indicating broadcast transmission data.

8. An apparatus according to claim 1,
characterized in that the broadcast transmission data packet contains identification information indicating broadcast transmission data and broadcast transmission data.

9. A radio communication system characterized by comprising:
a radio communication apparatus serving as a transmission source for performing broadcast transmission;
at least one of radio communication apparatuses serving as target destinations; and
a plurality of radio communication apparatuses for performing relaying operation between said radio communication apparatus as the transmission source and at least one of said radio communication apparatuses as the target destinations,
wherein said radio communication apparatus as the transmission source transmits a transmission packet containing identification information for identifying a radio communication apparatus as a target destination in starting broadcast transmission,
said at least one of said radio communication apparatuses as the target destinations transmits a response packet corresponding to the transmission packet upon receiving the transmission packet through said plurality of radio communication apparatuses,
said radio communication apparatus as the transmission source transmits a broadcast transmission data packet containing data to be broadcast upon receiving a response packet from at least one of said all radio communication apparatuses as the target destinations, and
at least one of said radio communication apparatuses as the target destinations receives the broadcast transmission data packet through said plurality of radio communication apparatuses.

10. A system according to claim 9, characterized in that said radio communication apparatus as the transmission source further comprises communication control means for stopping broadcast transmission when no response packets is received from all of the at least one of said radio communication apparatuses as the target destinations within a predetermined period of time after transmission of the transmission packet.

11. A system according to claim 9, characterized in that said radio communication apparatus as the transmission source further comprises means for terminating broadcast transmission processing upon receiving a response packet from all of the at least one of said radio communication apparatuses as the target destinations.

12. A system according to claim 9, characterized in that said radio communication apparatus as the transmission source determines that a communication route to a radio communication apparatus as a target destination is established, when identification information contained in the response packet and indicating a response destination coincides with identification information indicating said self-apparatus, and transmits the broadcast transmission data packet.

13. A system according to claim 12, characterized in that
said radio communication apparatus as the transmission source further comprises:
means for determining whether the response packet is a response packet that is received for the first time, when the identification information contained in the response packet and indicating the response destination coincides with the identification information indicating said self-apparatus; and
means for storing identification information contained in the response packet and indicating broadcast transmission data when it is determined that the response packet is not a response packet that is received for the first time.

14. A radio communication system characterized by comprising:
a radio communication apparatus as a transmission source for performing broadcast transmission;
at least one of radio communication apparatuses as target destinations; and
a plurality of radio communication apparatuses for performing relaying operation between said radio communication apparatus as the transmission source and at least one of said radio communication apparatuses as the target destinations,
wherein in starting broadcast transmission, said radio communication apparatus as the transmission source transmits a first transmission packet to which transmission source identification information indicating said self-apparatus, target destination identification information indicating a target destination, and broadcast identification information unique to data to be broadcast are added,
the radio communication apparatus, of said plurality of radio communication apparatuses, which receives the first transmission packet containing target destination identification information different from self-identification information, retransmits a second transmission packet in which the transmission source identification information contained in the received first transmission packet is replaced with the self-identification information, and stores the transmission source identification information contained in the received first transmission packet,
the radio communication apparatus as the target destination which receives the first or second transmission packet containing target destination identification information coinciding with the self-identification information transmits a first response packet in which transmission source identification information contained in the first or second packet is set as response destination identification information,
the radio communication apparatus, other than the transmission source, which has received the first response packet containing response destination identification information coinciding with the self-identification information retransmits a second response packet in which the response destination identification information contained in the received first response packet is replaced with the transmission source identification information stored at the time of reception of the first transmission packet, and stores broadcast identification information contained in the received first response packet,
said radio communication apparatus as the transmission source which receives the first or second response packet containing response destination identification information coinciding with the self-identification information determines that a communication route to said radio communication apparatus as the target destination is established, when the target destination identification information contained in the received first or second response packet indicates a designated target destination, and transmits a broadcast transmission data packet containing data to be broadcast and broadcast identification information unique to the data, and
each radio communication apparatus repeatedly retransmits the broadcast transmission data packet when the broadcast identification information contained in the broadcast transmission data packet coincides with the broadcast identification information stored at the time of reception of the first response packet, thereby performing broadcast transmission with respect to said radio communication apparatus as the target destination.

15. A broadcast transmission method of performing broadcast transmission in a radio network having a plurality of radio communication apparatuses, characterized by comprising the steps of:
transmitting a first transmission packet that designates a radio communication apparatus as a target destination in starting broadcast transmission;
receiving, after transmission of the first transmission packet, a response packet sent through radio communication apparatuses that directly communicate with each other;
determining on the basis of the received response packet whether a communication route to said radio communication apparatus as the target destination is established; and
upon determining that the communication route to said radio communication apparatus as the target destination is established, transmitting broadcast transmission data packet containing data to be broadcast, thereby broadcasting the broadcast transmission data packet between said respective radio communication apparatuses on the basis of type information of broadcast transmission data acquired at the time of reception of the response packet.

16. A radio communication apparatus characterized by comprising:
means for determining whether a communication route to radio communication apparatuses as target destinations is established, in starting broadcast transmission; and
means for transmitting a broadcast transmission data packet containing data to be broadcast, when it is determined that the communication route to said radio communication apparatuses as the target destinations is established,
wherein the transmitted broadcast transmission data packet reaches said radio communication apparatuses as the target destinations while being relayed by other radio communication apparatuses.

17. A communication apparatus characterized by comprising:
first transmission means for transmitting a first transmission packet that designates at least one of radio communication apparatuses as target destinations;
means for receiving response packets sent from radio communication apparatuses which directly communicate with each other after the first transmission packet is transmitted from said first transmission means;
means for determining on the basis of the received response packets received whether a communication route to said radio communication apparatus as the target destination is established; and
second transmission means for transmitting a transmission data packet containing data to be transmitted when the determined determination result indicates that a communication route to at least one of said radio communication apparatuses as the target destinations is established.

18. A radio communication apparatus for transmitting data to first apparatus through second apparatus, characterized by comprising:
first transmission means for transmitting an inquiry data to the first apparatus, the inquiry data indicating that a destination of the inquiry data is the second apparatus;
means for receiving response data from the first apparatus, the response data indicating whether the first apparatus is able to communicate with the second apparatus; and
second transmission means for transmitting a transmitting data when the receiving means receives the response data indicating that the first apparatus is able to communicate with the second apparatus.

19. An apparatus according to claim 18,
characterized by further comprising means for stopping transmission of the transmitting data by the second transmission means when no response data is received within a predetermined period of time after transmitting the inquiry data by the first transmission means.

20. An apparatus according to claim 18, characterized by further comprising means for terminating transmission process when the response data from the first apparatus serving as a target destination is received by the receiving means.

21. A broadcast transmission method in which data is transmitted to first apparatus through second apparatus, characterized by comprising:
transmitting an inquiry data to the first apparatus, the inquiry data indicating that a destination of the inquiry data is the second apparatus;
receiving response data from the first apparatus, the response data indicating whether the first apparatus is able to communicate with the second apparatus; and
transmitting a transmitting data when response data indicating that the first apparatus is able to communicate with the second apparatus is received.

22. A method according to claim 21,
characterized by further comprising stopping transmission of the transmitting data when no response data is received within a predetermined period of time after transmitting the inquiry data.

23. A method according to claim 21,
characterized by further comprising terminating transmission process when the response data from the first apparatus serving as a target destination is received.
